Europäisches Patentamt

(19) European Patent Office

Office européen des brevets

(11) EP 0 429 707 B1

(12) **EUROPÄISCHE PATENTSCHRIFT**

(45) Veröffentlichungstag und Bekanntmachung des Hinweises auf die Patenterteilung:
**27.03.1996 Patentblatt 1996/13**

(51) Int. Cl.$^6$: **C01F 11/18**

(21) Anmeldenummer: **89122027.9**

(22) Anmeldetag: **29.11.1989**

(54) **Verfahren zum Herstellen von basischem Calciumcarbonat, danach hergestelltes basisches Calciumcarbonat und seine Verwendung**

Process for the preparation of basic calcium carbonate, basic calcium carbonate therefrom and its use

Procédé de préparation de carbonate de calcium basique, carbonate de calcium basique préparé à partir de cette préparation et son utilisation

(84) Benannte Vertragsstaaten:
**AT BE CH DE ES FR GB GR IT LI LU NL SE**

(43) Veröffentlichungstag der Anmeldung:
**05.06.1991 Patentblatt 1991/23**

(73) Patentinhaber: **SCHAEFER KALK Kommanditgesellschaft D-65582 Diez (DE)**

(72) Erfinder: **Grothe, Johanna D-6251 Bierlenbach (DE)**

(74) Vertreter: **Rupprecht, Klaus, Dipl.-Ing. Kastanienstrasse 18 D-61476 Kronberg (DE)**

(56) Entgegenhaltungen:
**EP-A- 0 055 088     GB-A- 2 145 074**

- **CHEMICAL ABSTRACTS, Band 103, Nr. 3, 26. August 1985, Columbus, OH (US); H. YAMADA et al., Seiten 130-140, Nr. 56128k**
- **PATENT ABSTRACTS OF JAPAN, Band 11, Nr. 60 (C-405)(2507), 24. Februar 1987**
- **PATENT ABSTRACTS OF JAPAN, Band 11, Nr. 60 (C-405)(2507), 24. Februar 1987**
- **SCHIMMEL, "Basische Calciumcarbonate", Naturwissenschaften, 57. Jg., Heft 1, 1970**

**Beschreibung**

Die Erfindung bezieht sich auf ein Verfahren zum Herstellen von basischem Calciumcarbonat sowie auf nach diesem Verfahren hergestelltes basisches Calciumcarbonat und dessen Verwendung.

Die Herstellung von Calciumcarbonat durch Umsetzung einer wäßrigen Calciumhydroxid-Suspension mit einem Kohlendioxid enthaltenden Gas ist bekannt und wird nach verschiedenen Verfahren derart durchgeführt, daß dabei Calciumcarbonat-Kristalle als Rhomboeder, Skalenoeder, Nadeln, Stäbchen, säulenförmige oder sphärische Partikel ausgefällt werden. Beispiele von Herstellungsverfahren für derartige Calciumcarbonate finden sich in der DE-PS 29 13 613 mit weiteren Nachweisen.

Die bisher bekannten Verfahren befassen sich grundsätzlich nicht mit der Herstellung von basischem Calciumcarbonat. Es wird in der Literatur vielmehr überwiegend die Auffassung vertreten, daß derartige Verbindungen von Calcium nicht existierten. G. Schimmel beschreibt zwar in "Die Naturwissenschaften", Springer-Verlag, Berlin, Heidelberg, New York, 1970 (57. Jahrgang), Heft 1, Seite 38 - 39, ein basisches Calciumcarbonat, kommt aber gleichermaßen zu dem Ergebnis, daß dieses Carbonat metastabil ist und unter Normalbedingungen langsam in $CaCO_3$ und $Ca(OH)_2$ zerfällt. Nach Schimmel ist es gelungen, dieses nicht stabile Calciumcarbonat durch systematische Variation der Reaktionsbedingungen gemäß folgender Gleichung herzustellen:

$$3\ Ca(OH)_2 + 2\ CO_2 \rightarrow Ca_3(OH)_2(CO_3)_2 + 2\ H_2O.$$

Für die industrielle Verwendung eines Produktes, im vorliegenden Fall also eines basischen Calciumcarbonates, ist es jedoch unabdingbar, daß dieses Produkt zumindest über einen längeren Zeitraum stabil vorliegt.

Die Aufgabe der Erfindung besteht somit grundsätzlich darin, ein Verfahren anzugeben, mit dem beständiges basisches Calciumcarbonat bestimmter Kristallstruktur im großtechnischen Maßstabe herstellbar ist.

Diese Aufgabe ist gemäß der Erfindung gelöst, wenn man eine wäßrige Suspension von Calciumhydroxid durch Zugabe von $CO_2$ carbonatisiert, hierbei definierte Temperaturen der Suspension im Bereich von 2 - 50°C einhält und dann die Carbonatisierung bei einem Calcium-Carbonat-Molverhältnis von 3 : 2 oder 6 : 5 beendet.

Das derart gekennzeichnete erfinderische Verfahren führt zu Produkten, also basischen Calciumcarbonaten, die beständig sind und somit einer industriellen Weiterverarbeitung und Verwendung ohne zeitliche Einschränkungen zugänglich sind. Die mit dem erfindungsgemäßen Verfahren hergestellten Produkte eignen sich aufgrund ihrer Beschaffenheit insbesondere zur Verwendung in der Papierherstellung, für Dispersionsfarben, Füllstoffe für Kunststoffe, Gummi, Kunstharze etc.

Die mit dem erfindungsgemäßen Verfahren hergestellten Produkte weisen als plättchenförmige basische Calciumcarbonate ein außerordentlich gutes Deckvermögen auf, und ebenfalls, wenn man daraus plättchenförmigen Calcit herstellt, bzw. benutzt.

Gemäß der Erfindung ist bei der Herstellung bestimmter Kristallstrukturen von beständigem, basischem Calciumcarbonat, neben dem Erzielen der angegebenen Molverhältnisse auch die Einhaltung bestimmter Ausgangstemperaturbereiche der Reaktion der Calciumhydroxid-Suspension von Bedeutung. So erhält man bei einer Ausgangstemperatur der Suspension von 10 bis 15 °C, vorzugsweise 11 bis 13 °C plättchenförmiges basisches Calciumcarbonat, bei einem Ausgangstemperaturbereich von 15 bis 20 °C, vorzugsweise 16 bis 18 °C, stäbchen- oder faserförmiges basisches Calciumcarbonat, bei einem Ausgangstemperaturbereich von 20 bis 25 °C basisches Calciumcarbonat somatoider Kristallform und bei einem Ausgangstemperaturbereich der Suspension von 2 bis 5 °C basisches Calciumcarbonat mit vergleichsweise großen Rhomboedern. Die Konzentration der Calciumhydroxid-Suspension bewegt sich hierbei im Bereich von 30 bis 150 g CaO/l, vorzugsweise 40 bis 70 g CaO/l. Die Reaktionswärme wird jeweils abgeführt.

Die vorstehenden Ausführungen sind dahingehend zu verstehen, daß bei den jeweiligen Temperaturbereichen beständiges basisches Calciumcarbonat, vorzugsweise oder überwiegend der angegebenen Kristallform erhalten wird.

Gemäß einem weiteren Merkmal der Erfindung wird zum Erzielen des gewünschen Calcium-Carbonat-Molverhältnisses von 3 : 2 bzw. 6 : 5 die Carbonatisierung bei einem Gehalt von 5 bis 25 Gew.-% , vorzugsweise 5 bis 10 Gew.-%, an freiem Calciumhydroxid abgebrochen. Als Suspension gelangt bei dem erfindungsgemäßen Verfahren Kalkmilch und/oder eine Suspension von Kalkhydrat in Wasser zum Einsatz.

Nach einem anderen Merkmal der Erfindung kommen zur Carbonatisierung reines $CO_2$-Gas, $CO_2$-Luftgemische oder $CO_2$-Stickstoffgemische zur Verwendung, wobei die Gasgemische vorzugsweise 20 bis 40 % $CO_2$ enthalten. Die Carbonatisierung erfolgt gemäß der Erfindung bei Normaldruck oder bei Überdruck, oder die angestrebte Keimbildung erfolgt unter Überdruck und das anschließende Kristallwachstum unter Normaldruck.

Gemäß der Erfindung werden die basischen Calciumcarbonate mittels Sprühtrocknung oder Gefriertrocknung oder Alkoholtrocknung (Aethanol, Methanol, Brennspiritus, Erythrit etc.) als weiche pulverförmige Substanzen hergestellt.

Erfindungsgemäß ist weiterhin vorgesehen, daß den wäßrigen Suspensionen der basischen Calciumcarbonate eine anorganische mehrbasische Säure oder deren wasserlösliches Salz zugegeben, nach Mischen das basische Calciumcarbonat filtriert und anschließend getrocknet wird. Bei diesem Verfahren gestaltet sich der Trocknungsvorgang relativ preisgünstig. Es werden hierbei der wäßrigen Suspension des basischen Calciumcarbonates etwa 0,1 bis 2 Gew.-%, bezogen auf den CaO-Gehalt der Calciumhydroxid-Suspension dieser Säuren oder deren Salze zugesetzt.

Geeignete mehrbasische Säuren hierfür sind insbesondere Phosphorsäure, Borsäure, Kieselsäure bzw. deren wasserlösliche Salze.

Auch liegt es im Rahmen der Erfindung, den wäßrigen Suspensionen der basischen Calciumcarbonate Puffersubstanzen zuzusetzen und nach dem Mischen das basische Calciumcarbonat abzufiltrieren und zu trocknen. Infolge der Pufferwirkung derartiger Substanzen zerfallen die basischen Calciumcarbonate nicht beim Filtrieren und Trocknen.

Gemäß der Erfindung gelangen Puffer zum Einsatz, die den Bereich pH 8 bis pH 13 abdecken, z. B. 0,025 m Borax/0,1 m HCl, 0,025 m Borax / 0,1 m NaOH, 0,05 m $NaHCO_3$ / 0,1 m NaOH, 0,05 $Na_2 H PO_4$ / 0,1 m NaOH, 0,2 m KCl / 0,2 m NaOH, Borax-Kaliumbiphosphat nach Kolthoff, Borsäure nach Clark und Lubs, Glykokoll-Puffer nach Sörensen, Phosphatpuffer nach Sörensen, Veronalpuffer nach Michaelis, Puffer nach Theorell und Stenhagen. Die auf diese Weise behandelten wäßrigen Suspensionen der basischen Calciumcarbonate können entwässert und getrocknet werden, wobei die Trocknungstemperatur 120 °C nicht überschreiten, vorzugsweise < 100 °C sein sollte.

Das erfindungsgemäße Verfahren, insbesondere nach den Ansprüchen 10 und 11, kann durch Dosierung der Zusätze so beeinflußt werden, daß die stäbchen- bis kettenförmigen Modifikationen zu lockeren Faserknäueln agglomerieren, wobei kugelförmige Partikel mit einem Durchmesser von 5 bis 25 Mikron gebildet werden und die plättchenförmige Modifikation ebenfalls kugelförmige Partikel mit 5 bis 25 Mikron Durchmesser bildet. Hierbei werden die Plättchen im wesentlichen parallel geschichtet. Beide Modifikationen bilden somit Kugelpartikel mit großer innerer Porosität. Zur Erzielung der jeweils angestrebten Modifikation oder Kristallstruktur werden die Temperaturbereiche gemäß den Ansprüchen 2 bis 5 eingehalten.

Gemäß der Erfindung ist auch vorgesehen, bei der Carbonatisierung der wäßrigen Calciumhxdroxid-Suspension 0,01 bis 1,0 Gew.-%, bezogen auf den CaO-Gehalt der Calciumhydroxid-Suspension, eines organischen Polyphosponates zuzusetzen. Solche Organo-Polyphosphonate sind als Komplexbildner bekannt, wie z. B. Nitrilotris (methylenphosphonsäure), 1-Amino- und 1-Hydroxyalkan- 1,1-diphosphonsäure, hexamethylen-diamintetra (methylenphosphorsäure) etc., sowie deren Natrium-, Kalium- und Ammoniumsalze. Die Ausgangstemperatur der Suspension hängt von der gewünschten Kristallstruktur der basischen Calciumcarbonat-Modifikation ab und liegt bei 12 bis 50 °C, die Reaktionswärme wird vorzugsweise abgeführt. Anstelle eines Organo-Polyphosphonates kann auch ein Polyphosphat eingesetzt werden, wobei das Polyphosphat vorzugsweise ein Natriumpolyphosphat ist, insbesondere Calgon, das in einer Konzentration von 0,1 bis 1 Gew.-%, bezogen auf den CaO-Gehalt der Calciumhydroxid-Suspension, zugegeben wird.

Die Erfindung sieht auch vor, daß der Calciumhydroxid-Suspension vor Beginn der Reaktion oder während der ersten 10 % der Gesamtreaktionszeit eine mehrbasische Hydroxycarbonsäure und/oder deren wasserlösliches Salz in einer Konzentration von vorzugsweise 0,01 bis 0,5 Gew.-%, bezogen auf den CaO-Gehalt der Calciumhydroxid-Suspension, zugesetzt wird. Geeignete Hydroxycarbonsäuren, die bei dem erfindungsgemäßen Verfahren verwendet werden können sind z. B.: Zitronensäure, Apfelsäure, Maleinsäure, Weinsäure, Gluconsäure, 3,4-Dihydroxybenzoesäure, Phthalsäure sowie deren wasserlöslichen Alkali- und/oder Ammoniumsalze. Der Anteil des zugesetzten Mittels liegt innerhalb weiter Grenzen je nach Wirksamkeit des betreffenden Mittels und ist ferner abhängig von dem gewünschten Kristallhabitus des basischen Calciumcarbonates.

Durch Zugabe der Hydroxycarbonsäuren ist bezüglich der Anfangstemperaturen ein größerer Spielraum gegeben.

Erfindungsgemäß wird weiterhin den wäßrigen Suspensionen der basischen Calciumcarbonate eine langkettige Fettsäure oder deren Salz zugesetzt, um dem Produkt hydrophobe Eigenschaften zu verleihen und die Einarbeitung, z. B. in Kunststoffe, Gummi etc. zu optimieren. Der Gewichtsteil der Fettsäure oder des Fettsäuregehaltes liegt bei 0,001 bis 3 Gew.-%, vorzugsweise bei 0,1 bis 2 Gew.-% bezogen auf den CaO-Gehalt der Calciumhydroxid-Suspension.

Die basischen Calciumcarbonate können als Slurry mit einem Feststoffgehalt bis zu 70 Gew.-%, als Paste oder als pulverförmiges Produkt hergestellt werden.

Ein weiterer Gegenstand der Erfindung liegt im Zusatz von Aluminiumsulfat zur Herstellung einer Mischung von basischem Calciumcarbonat und Satinweiß. Vorzugsweise wird hierbei das plättchenförmige basische Calciumcarbonat mit einem Calcium-Carbonat-Molverhältnis 3 : 2 hergestellt und das freie Hydroxid durch intensives Rühren mit einer äquivalenten Menge Aluminiumsulfat bei Temperaturen von 30 bis 50 °C, vorzugsweise bei 30 °C, zu Satinweiß umgesetzt. Ferner kann vor dem Einbringen von Aluminiumsulfat ein Polyphosphat, vorzugsweise Calgon, als Komplexbildner zugesetzt werden. Das Produkt kann nach Zugabe einer anorganischen mehrbasischen Säure oder deren wasserlöslichem Salz oder nach Zugabe einer Puffersubstanz filtriert und getrocknet werden. Man erhält erfindungsgemäß ein Produkt, das als Pigment z. B. in der Papierherstellung eingesetzt werden kann.

Gegenstand der Erfindung ist weiterhin die Herstellung eines Calciumcarbonates mit Calcitstruktur und plättchenförmigem Habitus. In der Natur tritt eine Calcitvarietät auf, die unter der Bezeichnung "Papierspat" bekannt ist und plättchenförmige Kristalle aufweist. Somit ist erwiesen, daß neben den bekannten Calcit-Rhomboedern, Skalenoedern, Nadeln, Stäbchen, Ketten, den säulenförmigen und sphärischen Partikeln auch eine plättchenförmige Calcit-Modifikation existiert, die technisch bisher durch Ausfällen aus einer Calciumhydroxid-Suspension mittels eines kohlendioxidhaltigen Gases nicht hergestellt werden konnte. Ein plättchenförmiges Calciumcarbonat ist ein wirtschaftlich interessantes Produkt als Füllstoff für die Papierherstellung, für Dispersionsfarben, Kunststoffe, Kunstharze, Gummi etc. Gegenüber anderen plättchenförmigen Füllstoffen, wie z. B. Kaolin, Talkum und insbesondere gemahlener Naturkreide zeichnet sich das gefällte plättchenförmige Calciumcarbonat vor allem durch seinen hohen Weißgrad aus.

Erfindungsgemäß wird der plättchenförmige Calcit nach den Verfahren gemäß Anspruch 17 und 18 hergestellt:

Es wird erfindungsgemäß eine wäßrige Suspension von Calciumhydroxid hergestellt mit einer Konzentration von 30 bis 150 g CaO/l, vorzugsweise 40 bis 70 g CaO, in die zur Carbonatisierung Kohlendioxid eingeleitet wird. Die Ausgangstemperatur beträgt vorzugsweise 10 bis 20 °C, die Reaktionswärme wird vorzugsweise abgeführt. Das Reaktionsende wird anhand der Umsatzraten bestimmt. Es wird das plättchenförmige basische Calciumcarbonat mit einem Calcium-Carbonat-Molverhältnis 3 : 2 ausgefällt. Der Suspension des basischen Calciumcarbonates wird erfindungsgemäß eine anorganische mehrbasische Säure oder deren wasserlösliches Salz, vorzugsweise 2 Gew.-% Borsäure, bezogen auf den CaO-Gehalt der Calciumhydroxid-Suspension, zugesetzt und 15 Minuten intensiv gerührt. Danach wird weiter Kohlendioxid eingeleitet bis das basische Calciumcarbonat zu plättchenförmigem Calcit carbonatisiert ist.

Dieses Verfahren kann nach Anspruch 18 derart modifiziert werden, daß das basische Calciumcarbonat mit einem Calcium-Carbonat-Molverhältnis 3 : 2 hergestellt wird, wobei die Herstellung gemäß Anspruch 12 und 13 modifiziert werden kann und ferner nach Anspruch 6 verfahren werden kann und daß derart erfindungsgemäß gefällte Produkte als Impfmaterial eingesetzt werden, indem man einer Calciumhydroxid-Suspension gemäß Anspruch 7 mit einem CaO-Gehalt von vorzugsweise 30 bis 70 g CaO/l 15 bis 30 Gew.-%, bezogen auf den CaO-Gehalt, des Impfmaterials zufügt und Kohlendioxid eingeleitet wird, bis das Umsetzungsgemisch quantitativ in plättchenförmiges Calciumcarbonat überführt ist, wobei das Verfahren derart modifiziert werden kann, daß mit dem Impfmaterial der Suspension eine Phosphorsäure und/oder deren wasserlösliches Salz, vorzugsweise Calgon, zugesetzt werden kann und das Umsetzungsgemisch quantitativ zu plättchenförmigem Calcit carbonatisiert wird.

Die Erfindung wird durch die nachfolgenden Beispiele näher erläutert.

Beispiel 1:

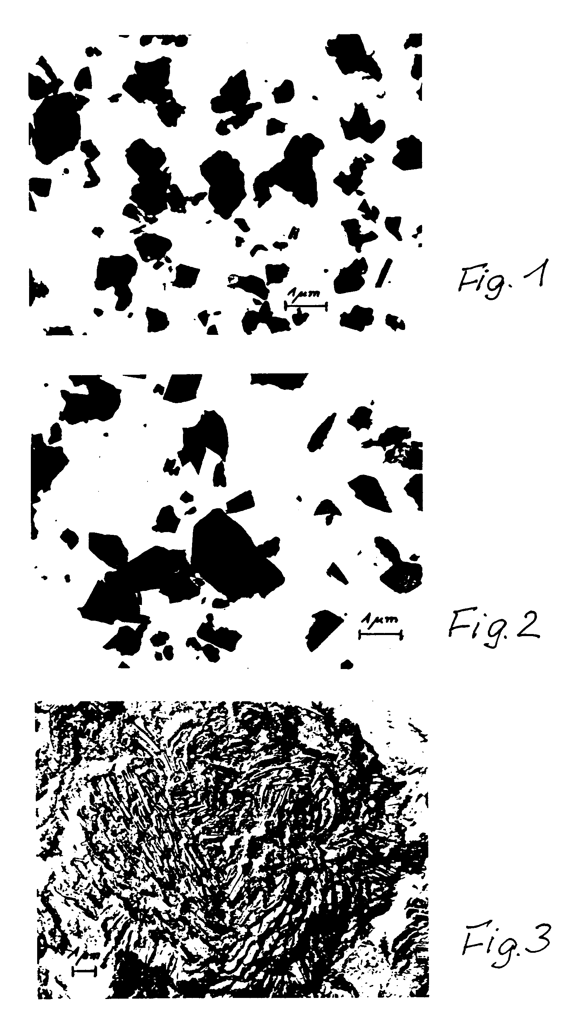

In eine Kalkhydrat-Suspension mit einer CaO-Konzentration von 70 g CaO/l wird bei einer Ausgangstemperatur von 10 °C ein $CO_2$-Luftgemisch mit 40 % $CO_2$ eingeleitet, wobei die Reaktionstemperatur der Suspension 20 °C nicht überschreiten soll. Die Reaktion zu dem plättchenförmigen basischen Calciumcarbonat ist abgeschlossen, wenn die Umsatzraten das Calcium-Carbonat-Molverhältnis 3 : 2 ergeben. Das Produkt wird sprühgetrocknet. Fig. 1

Beispiel 2:

Das plättchenförmige basische Calciumcarbonat wird wie in Beispiel 1 hergestellt. Der Suspension werden 2 Gew.-% Borsäure bezogen auf den CaO-Gehalt der Kalkhydrat-Suspension zugesetzt. Es wird 15 Minuten gerührt. Das plättchenförmige Material wird anschließend filtriert, bei 100 °C getrocknet und gemahlen. Fig. 2

Beispiel 3:

Das plättchenförmige basische Calciumcarbonat wird wie in Beispiel 1 hergestellt. Der Suspension werden 2 Gew.-% $Na_2H\,PO_4$ . $12\,H_2O$ bezogen auf den CaO-Gehalt der Kalknydrat-Suspensiion zugegeben, und anschließend wird 15 Minuten intensiv gerührt. Das Produkt wird filtriert, bei 100 °C getrocknet und gemahlen. Fig. 3.

Beispiel 4:

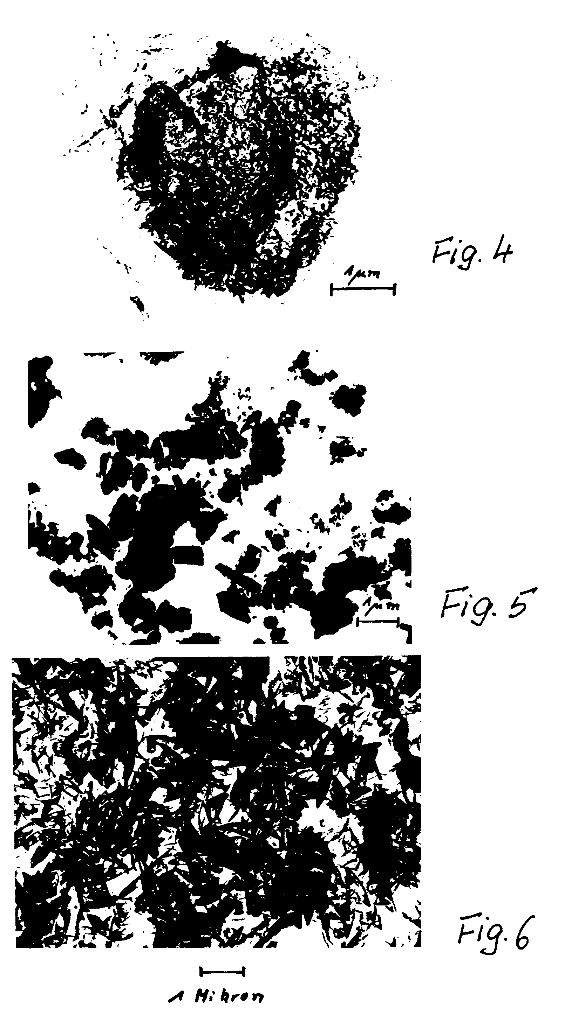

In eine Kalkmilch mit einer CaO-Konzentration von 75 g CaO/l wird bei einer Ausgangstemperatur von 18 °C ein $CO_2$-Luftgemisch mit 36 % $CO_2$ eingeleitet, wobei die Reaktionstemperatur 25 °C nicht überschreiten soll. Die Reaktion ist beendet, wenn die Umsatzraten das Calcium-Carbonat-Molverhältnis 3 : 2 ergeben. Der Suspension werden 2 Gew.-% $Na_2H\,PO_4$ . $12\,H_2O$ bezogen auf den CaO-Gehalt der Kalkmilch zugegeben und anschließend wird 15 Minuten intensiv gerührt. Das stäbchenförmige Produkt wird filtriert, bei 100 °C getrocknet und gemahlen. Fig. 4

Beispiel 5:

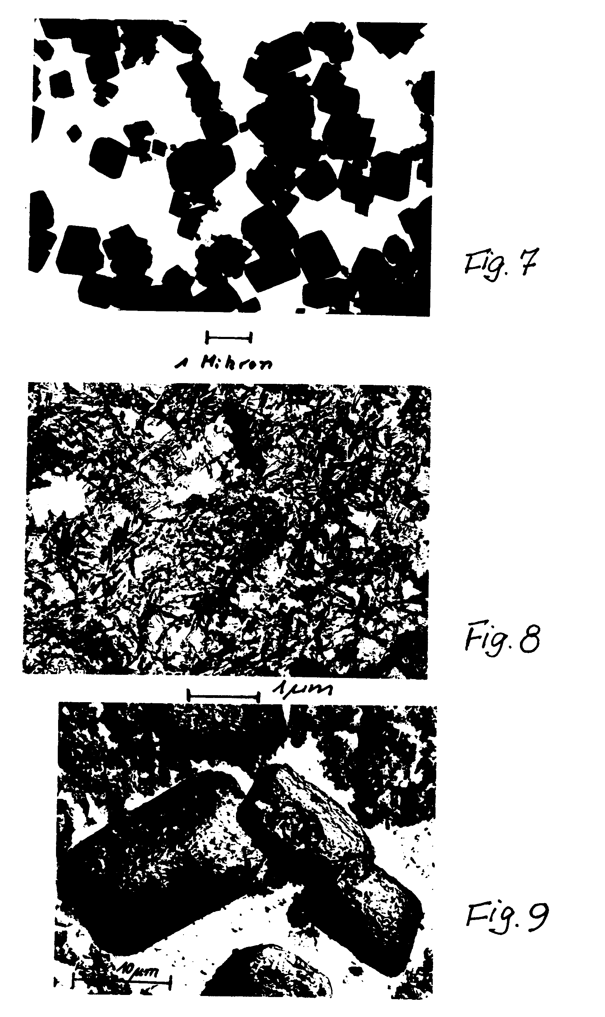

Aus einer wäßrigen Kalknydrat-Suspension wird wie in Beispiel 1 das plättchenförmige basische Calciumcarbonat hergestellt. Zwei Drittel der Suspension werden aus dem Fällbehälter abgelassen, während ein Drittel als Impfmaterial im Reaktionsgefäß verbleibt. Nunmehr wird das Reaktionsgefäß mit Kalkhydrat-Suspension entsprechend Beispiel 1 aufgefüllt und weiter $CO_2$ eingeleitet bis zur vollständigen Carbonatisierung. Fig. 5

Beispiel 6:

In eine Kalkhydrat-Suspension mit einer CaO-Konzentration von 60 g CaO/l wird bei einer Ausgangstemperatur von 22 °C ein $CO_2$-Luftgemisch mit 40 % $CO_2$ eingeleitet, wobei die Reaktionstemperatur der Suspension 45 °C nicht überschreiten soll. Die Reaktion zu dem somatoiden basischen Calciumcarbonat ist abgeschlossen, wenn die Umsatzraten das Calcium-Carbonat-Molverhältnis 3 : 2 ergeben. Das Produkt wird sprühgetrocknet. Fig. 6

Beispiel 7:

In eine Kalkmilch mit einer CaO-Konzentration von 100 g CaO/l wird bei einer Ausgangstemperatur von 25 °C ein $CO_2$- Luftgemisch mit 36 % $CO_2$ eingeleitet, wobei die Reaktionstemperatur 48 °C nicht überschreiten soll. Im übrigen wird wie in Beispiel 6 verfahren. Fig. 6

Beispiel 8:

In eine Kalkhydrat-Suspension mit einer Konzentration von 60 g CaO/l wird bei einer Ausgangstemperatur von 2 °C reines $CO_2$-Gas eingeleitet, wobei die Reaktionstemperatur 5 °C nicht überschreiten soll. Das so gebildete rhomboedrische basische Calciumcarbonat wird mittels Alkohol getrocknet. Fig. 7.

Beispiel 9:

In eine Kalkhydrat-Suspension mit einer Konzentration von 60 g CaO/l wird bei einer Ausgangstemperatur von 2 °C ein $CO_2$-Luftgemisch mit 40 % $CO_2$ eingeleitet, wobei der Suspension 0,1 % Natriumpolyphosphat, bezogen auf den CaO-Gehalt der Suspension, zugesetzt wird. Im übrigen wird wie in Beispiel 8 verfahren. Fig. 7.

Beispiel 10:

In eine Kalkhydrat-Suspension mit einer Konzentration von 70 g CaO/l wird bei einer Ausgangstemperatur von 15 °C reines $CO_2$-Gas eingeleitet, wobei die Reaktionstemperatur 28 °C nicht überschreiten soll. Die so entstehende Suspension aus stäbchen- bis faserförmigem basischem Calciumcarbonat wird mit 1,5 % Borsäure, bezogen auf den CaO-Gehalt der Kalknydrat-Suspension versetzt und nach 15minütigem Rühren filtriert und getrocknet. Fig. 8.

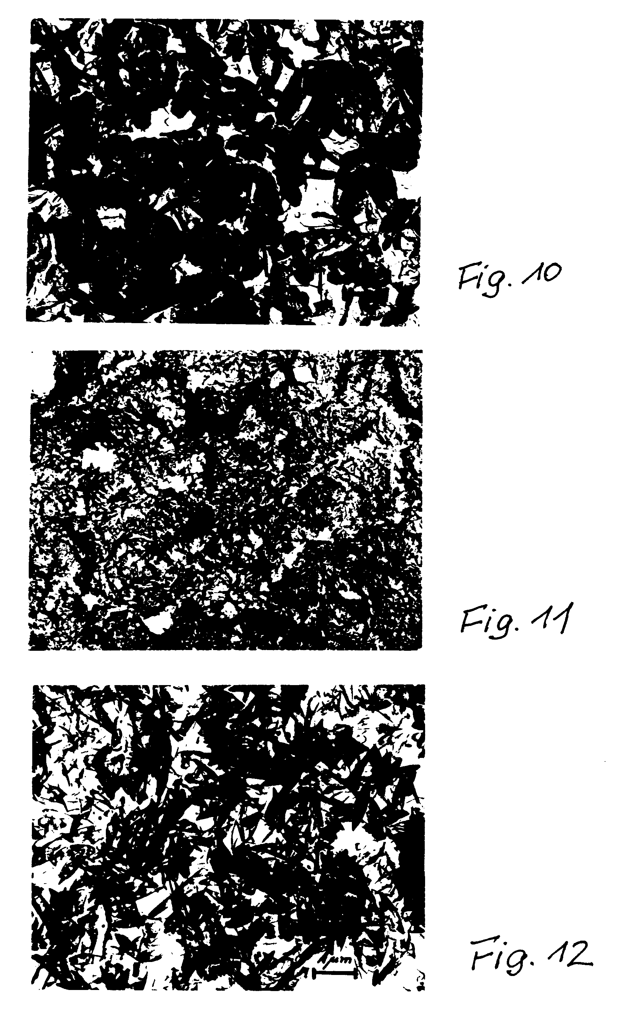

Die Fig. 9 bis 12 geben elektronenmikroskopische Aufnahmen des basischen Calciumcarbonates der chemischen Zusammensetzung $Ca_3(OH)_2(CO_3)_2$ . x $H_2O$ wieder. Bei gleichen Gitterparametern zeigen die Partikel unterschiedliche Kristalltracht und Kristallhabitus. Das Kristallwachstum läßt sich durch geänderte Gasungsbedingungen variieren, so z. B. im vorliegenden Fall durch Änderung der Gasungstemperatur. Fig. 9 zeigt das bei 5 °C hergestellte Produkt, Fig. 10 bei 10 °C, Fig. 11 bei 15 °C und Fig. 12 das bei 20 °C hergestellte Material. Die Gasung kann so geführt werden, daß die Kristalle durch Einbau von $CO_3$-Gruppen in das Kristallgitter in die basische Form $Ca_6(OH)_2(CO_3)_5$ . x $H_2O$ übergehen ohne die Änderung von Kristalltracht und Habitus. Erst wenn die Gasung entsprechend dem bisher bekannten technischen Verfahren weitergeführt wird, kristallisieren beide basischen Calciumcarbonate zu Calcit mit der chemischen Formel $CaCO_3$ um, wobei sich Kristalltracht und Kristallhabitus ändern und die bekannten Calcit-Modifikationen entstehen.

## Patentansprüche

### Patentansprüche für folgende Vertragsstaaten : AT, BE, CH, DE, FR, GB, GR, IT, LI, LU, NL, SE

1. Verfahren zum Herstellen von lagerfähigem, basischem Calciumcarbonat in Form von Slurry, Paste oder Pulver der Zusammensetzung $Ca_3(OH)_2(CO_3)_2$ oder $Ca_6(OH)_2(CO_3)_5$ und bestimmter Kristallstruktur durch Carbonatisierung einer wäßrigen Suspension von Calciumhydroxid mittels Zugabe von $CO_2$ bei definierten Ausgangstemperaturen der Suspension im Bereich von 2 bis 50 °C, wobei die Carbonatisierung bei einem Calcium-Carbonat-Molverhältnis von 3 : 2 oder 6 : 5 und einem Gehalt von 5 bis 25 Gew.-%, vorzugsweise 5 bis 10 Gew.-%, an freiem Calciumhydroxid abgebrochen wird, und wobei der wäßrigen Suspension der gebildeten basischen Calciumcarbonate entweder - zum einen - eine anorganische mehrbasische Säure, deren wasserlösliches Salz und/oder Puffersubstanzen zugegeben werden und nach Mischen das basische Calciumcarbonat filtriert wird oder - zum anderen - das basische Calciumcarbonat mittels Sprüh-, Gefrier- oder Alkoholtrocknung (Ethanol, Methanol, Brennspiritus, Erythrit etc.) als weiche pulverförmige Substanz hergestellt wird.

2. Verfahren nach Anspruch 1, dadurch gekennzeichnet, daß die Carbonatisierung in Gegenwart einer Phosphorsäure und/oder deren wasserlöslichen Salze oder eines anionischen Organopolyphosphonat-Polyelektrolyten erfolgt.

3. Verfahren nach Anspruch 1, dadurch gekennzeichnet, daß die Carbonatisierung in Gegenwart von mehrbasischen Hydroxycarbonsäuren erfolgt.

4. Verfahren nach Ansprüchen 1 bis 3, dadurch gekennzeichnet, daß den basischen Calciumcarbonaten eine langkettige Fettsäure oder deren Salz zugesetzt wird.

5. Verfahren nach mindestens einem der Ansprüche 1 bis 4, dadurch gekennzeichnet, daß durch Zusatz von Aluminiumsulfat zur Suspension eine Mischung von basischem Calciumcarbonat und Satinweiß hergestellt wird.

6. Verfahren nach mindestens einem der Ansprüche 1 bis 5, dadurch gekennzeichnet, daß das basische Calciumcarbonat mit einer anorganischen mehrbasischen Säure oder deren wasserlöslichem Salz gemischt und anschließend hieran durch Einleiten

von $CO_2$ in vorwiegend plättchenförmigen Calcit ($CaCO_3$) überführt wird.

**7.** Verfahren nach mindestens einem der Ansprüche 1 bis 6, dadurch gekennzeichnet, daß das basische Calciumcarbonat einer wäßrigen Calciumhydroxidsuspension als Impfkristalle zugesetzt und in Gegenwart von Polyphosphaten oder eines Organopolyphosphonates durch Einleiten von $CO_2$ plättchenförmiger Calcit ($CaCO_3$) ausgefällt wird.

**8.** Verfahren nach mindestens einem der Ansprüche 1 bis 7, dadurch gekennzeichnet, daß zur Herstellung von stäbchen- oder faserförmigem basischem Calciumcarbonat die Ausgangstemperatur der Suspension auf 15 bis 20 °C, vorzugsweise 16 bis 18 °C, eingestellt wird.

**9.** Verfahren nach mindestens einem der Ansprüche 1 bis 7, dadurch gekennzeichnet, daß zur Herstellung von basischem Calciumcarbonat somatoider Kristallform die Ausgangstemperatur der Suspension auf 20 bis 25 °C eingestellt wird.

**10.** Verfahren nach mindestens einem der Ansprüche 1 bis 7, dadurch gekennzeichnet, daß zur Herstellung von basischem Calciumcarbonat in vergleichsweise großen Rhomboedern die Ausgangstemperatur der Suspension auf 2 bis 5 °C eingestellt wird.

**11.** Basisches Calciumcarbonat, hergestellt nach mindestens einem der Ansprüche 1 bis 10.

**12.** Verwendung des basischen Calciumcarbonates nach Anspruch 11 bei der Herstellung von Papier, Dispersionsfarben, Füllstoffen für Kunststoffe, Gummi, Kunstharz.

**Patentansprüche für folgenden Vertragsstaat : ES**

**1.** Verfahren zum Herstellen von lagerfähigem, basischem Calciumcarbonat in Form von Slurry, Paste oder Pulver der Zusammensetzung $Ca_3(OH)_2(CO_3)_2$ oder $Ca_6(OH)_2(CO_3)_5$ und bestimmter Kristallstruktur durch Carbonatisierung einer wäßrigen Suspension von Calciumhydroxid mittels Zugabe von $CO_2$ bei definierten Ausgangstemperaturen der Suspension im Bereich von 2 bis 50 °C, wobei die Carbonatisierung bei einem Calcium-Carbonat-Molverhältnis von 3 : 2 oder 6 : 5 und einem Gehalt von 5 bis 25 Gew.-%, vorzugsweise 5 bis 10 Gew.-%, an freiem Calciumhydroxid abgebrochen wird, und wobei der wäßrigen, Suspension der gebildeten basischen Calciumcarbonate entweder - zum einen - eine anorganische mehrbasische Säure, deren wasserlösliches Salz und/oder Puffersubstanzen zugegeben werden und nach Mischen das basische Calciumcarbonat filtriert wird oder - zum anderen das basische Calciumcarbonat mittels Sprüh-, Gefrier- oder Alkoholtrocknung (Ethanol, Methanol, Brennspiritus, Erythrit etc.) als weiche pulverförmige Substanz hergestellt wird.

**2.** Verfahren nach Anspruch 1, dadurch gekennzeichnet, daß die Carbonatisierung in Gegenwart einer Phosphorsäure und/oder deren wasserlöslichen Salze oder eines anionischen Organopolyphosphonat-Polyelektrolyten erfolgt.

**3.** Verfahren nach Anspruch 1, dadurch gekennzeichnet, daß die Carbonatisierung in Gegenwart von mehrbasischen Hydroxycarbonsäuren erfolgt.

**4.** Verfahren nach Ansprüchen 1 bis 3, dadurch gekennzeichnet, daß den basischen Calciumcarbonaten eine langkettige Fettsäure oder deren Salz zugesetzt wird.

**5.** Verfahren nach mindestens einem der Ansprüche 1 bis 4, dadurch gekennzeichnet, daß durch Zusatz von Aluminiumsulfat zur Suspension eine Mischung von basischem Calciumcarbonat und Satinweiß hergestellt wird.

**6.** Verfahren nach mindestens einem der Ansprüche 1 bis 5, dadurch gekennzeichnet, daß das basische Calciumcarbonat mit einer anorganischen mehrbasischen Säure oder deren wasserlöslichem Salz gemischt und anschließend hieran durch Einleiten von $CO_2$ in vorwiegend plättchenförmigen Calcit ($CaCO_3$) überführt wird.

**7.** Verfahren nach mindestens einem der Ansprüche 1 bis 6, dadurch gekennzeichnet, daß das basische Calciumcarbonat einer wäßrigen Calciumhydroxidsuspension als Impfkristalle zugesetzt und in Gegenwart von Polyphosphaten oder eines Organopolyphosphonates durch Einleiten von $CO_2$ plättchenförmiger Calcit ($CaCO_3$) ausgefällt wird.

**8.** Verfahren nach mindestens einem der Ansprüche 1 bis 7, dadurch gekennzeichnet, daß zur Herstellung von stäbchen- oder faserförmigem basischem Calciumcarbonat die Ausgangstemperatur der Suspension auf 15 bis 20 °C, vorzugsweise 16 bis 18 °C, eingestellt wird.

**9.** Verfahren nach mindestens einem der Ansprüche 1 bis 7, dadurch gekennzeichnet, daß zur Herstellung von basischem Calciumcarbonat somatoider Kristallform die Ausgangstemperatur der Suspension auf 20 bis 25 °C eingestellt wird.

**10.** Verfahren nach mindestens einem der Ansprüche 1 bis 7, dadurch gekennzeichnet, daß zur Herstellung von basischem Calciumcarbonat in vergleichsweise großen Rhomboedern die Ausgangstemperatur der Suspension auf 2 bis 5 °C eingestellt wird.

11. Verwendung des basischen Calciumcarbonates hergestellt nach den Ansprüchen 1 bis 10 bei der Herstellung von Papier, Dispersionsfarben, Füllstoffen für Kunststoffe, Gummi, Kunstharz.

**Claims**

**Claims for the following Contracting States : AT, BE, CH, DE, FR, GB, GR, IT, LI, LU, NL, SE**

1. Process for preparing storable, basic calcium carbonate in the form of slurry, paste or powder having the composition $Ca_3(OH)_2(CO_3)_2$ or $Ca_6(OH)_2(CO_3)_5$ and a particular crystal structure by carbonation of an aqueous suspension of calcium hydroxide by means of addition of $CO_2$ at defined starting temperatures of the suspension in the range from 2 to 50°C, wherein the carbonation is stopped at a calcium:carbonate molar ratio of 3:2 or 6:5 and a content of from 5 to 25% by weight, preferably from 5 to 10% by weight, of free calcium hydroxide, and either, on the one hand, an inorganic polybasic acid, its water-soluble salt and/or buffer substances are added to the aqueous suspension of the basic calcium carbonate formed and, after mixing, the basic calcium carbonate is filtered, or, on the other hand, the basic calcium carbonate is produced as a soft pulverulent material by means of spray, freeze or alcohol drying (ethanol, methanol, methylated spirit, erythritol, etc.).

2. Process according to Claim 1, characterized in that the carbonation is carried out in the presence of a phosphoric acid and/or its water-soluble salts or an anionic organopolyphosphonate polyelectrolyte.

3. Process according to Claim 1, characterized in that the carbonation is carried out in the presence of polybasic hydroxycarboxylic acids.

4. Process according to any one of Claims 1 to 3, characterized in that a long-chain fatty acid or its salt is added to the basic calcium carbonate.

5. Process according to at least one of Claims 1 to 4, characterized in that a mixture of basic calcium carbonate and satin white is prepared by addition of aluminium sulphate to the suspension.

6. Process according to at least one of Claims 1 to 5, characterized in that the basic calcium carbonate is mixed with an inorganic polybasic acid or its water soluble salt and subsequent thereto is converted into predominantly platelet-like calcite ($CaCO_3$) by passing in $CO_2$.

7. Process according to at least one of Claims 1 to 6, characterized in that the basic calcium carbonate is added as seed crystals to an aqueous calcium hydroxide suspension and platelet-like calcite ($CaCO_3$) is precipitated in the presence of polyphosphates or an organopolyphosphonate by passing in $CO_2$.

8. Process according to at least one of Claims 1 to 7, characterized in that, to prepare rod-like or fibrous basic calcium carbonate, the initial temperature of the suspension is set to from 15 to 20°C, preferably from 16 to 18°C.

9. Process according to at least one of Claims 1 to 7, characterized in that, to prepare basic calcium carbonate of somatoidal crystal shape, the initial temperature of the suspension is set to from 20 to 25°C.

10. Process according to at least one of Claims 1 to 7, characterized in that, to prepare basic calcium carbonate in comparatively large rhombohedra, the initial temperature of the suspension is set to from 2 to 5°C.

11. Basic calcium carbonate prepared according to at least one of Claims 1 to 10.

12. Use of the basic calcium carbonate according to Claim 11 in the production of paper, emulsion paints, fillers for plastics, rubber, synthetic resin.

**Claims for the following Contracting State : ES**

1. Process for preparing storable, basic calcium carbonate in the form of slurry, paste or powder having the composition $Ca_3(OH)_2(CO_3)_2$ or $Ca_6(OH)_2(CO_3)_5$ and a particular crystal structure by carbonation of an aqueous suspension of calcium hydroxide by means of addition of $CO_2$ at defined starting temperatures of the suspension in the range from 2 to 50°C, wherein the carbonation is stopped at a calcium:carbonate molar ratio of 3:2 or 6:5 and a content of from 5 to 25% by weight, preferably from 5 to 10% by weight, of free calcium hydroxide, and either, on the one hand, an inorganic polybasic acid, its water-soluble salt and/or buffer substances are added to the aqueous suspension of the basic calcium carbonate formed and, after mixing, the basic calcium carbonate is filtered, or, on the other hand, the basic calcium carbonate is produced as a soft pulverulent material by means of spray, freeze or alcohol drying (ethanol, methanol, methylated spirit, erythritol, etc.).

2. Process according to Claim 1, characterized in that the carbonation is carried out in the presence of a phosphoric acid and/or its water-soluble salts or an anionic organopolyphosphonate polyelectrolyte.

3. Process according to Claim 1, characterized in that the carbonation is carried out in the presence of polybasic hydroxycarboxylic acids.

4. Process according to any one of Claims 1 to 3, characterized in that a long-chain fatty acid or its salt is added to the basic calcium carbonate.

5. Process according to at least one of Claims 1 to 4, characterized in that a mixture of basic calcium carbonate and satin white is prepared by addition of aluminium sulphate to the suspension.

6. Process according to at least one of Claims 1 to 5, characterized in that the basic calcium carbonate is mixed with an inorganic polybasic acid or its water soluble salt and subsequent thereto is converted into predominantly platelet-like calcite ($CaCO_3$) by passing in $CO_2$.

7. Process according to at least one of Claims 1 to 6, characterized in that the basic calcium carbonate is added as seed crystals to an aqueous calcium hydroxide suspension and plateletlike calcite ($CaCO_3$) is precipitated in the presence of polyphosphates or an organopolyphosphonate by passing in $CO_2$.

8. Process according to at least one of Claims 1 to 7, characterized in that, to prepare rod-like or fibrous basic calcium carbonate, the initial temperature of the suspension is set to from 15 to 20°C, preferably from 16 to 18°C.

9. Process according to at least one of Claims 1 to 7, characterized in that, to prepare basic calcium carbonate of somatoidal crystal shape, the initial temperature of the suspension is set to from 20 to 25°C.

10. Process according to at least one of Claims 1 to 7, characterized in that, to prepare basic calcium carbonate in comparatively large rhombohedra, the initial temperature of the suspension is set to from 2 to 5°C.

11. Use of the basic calcium carbonate prepared according to any of Claims 1 to 10 in the production of paper, emulsion paints, fillers for plastics, rubber, synthetic resin.

**Revendications**

**Revendications pour les Etats contractants suivants : AT, BE, CH, DE, FR, GB, GR, IT, LI, LU, NL, SE**

1. Procédé de préparation d'un carbonate de calcium basique stable au stockage, sous forme de suspension, de pâte ou de poudre, de composition $Ca_3(OH)_2(CO_3)_2$ ou $Ca_6(OH)_2(CO_3)_5$ et de structure cristalline déterminée, par carbonatation d'une suspension aqueuse d'hydroxyde de calcium par addition de $CO_2$, à des températures initiales définies de la suspension, dans la plage allant de 2 à 50°C, la carbonatation étant interrompue à un rapport molaire calcium/carbonate de 3:2 ou 6:5 et à une teneur en hydroxyde de calcium libre allant de 5 à 25 % en poids, de préférence de 5 à 10 % en poids, et soit - d'une part - à la suspension aqueuse des carbonates de calcium basiques formés étant ajoutés un polyacide minéral, un de ses sels solubles dans l'eau et/ou des substances tampon, et, après mélange, le carbonate basique étant séparé par filtration, soit - d'autre part - le carbonate de calcium basique étant obtenu sous forme d'une substance pulvérulente tendre, par séchage par atomisation, congélation ou à l'alcool (éthanol, méthanol, alcool à brûler, érythritol, etc.).

2. Procédé selon la revendication 1, caractérisé en ce que la carbonatation est effectuée en présence d'un acide phosphorique et/ou de ses sels solubles dans l'eau ou d'un polyélectrolyte de type organopolyphosphonate anionique.

3. Procédé selon la revendication 1, caractérisé en ce que la carbonatation est effectuée en présence d'acides hydroxypolycarboxyliques.

4. Procédé selon les revendications 1 à 3, caractérisé en ce que l'on ajoute aux carbonates de calcium basiques un acide gras à longue chaîne ou un de ses sels.

5. Procédé selon au moins l'une des revendications 1 à 4, caractérisé en ce que, par addition de sulfate d'aluminium à la suspension, on prépare un mélange de carbonate de calcium basique et de blanc satiné.

6. Procédé selon au moins l'une des revendications 1 à 5, caractérisé en ce que le carbonate de calcium basique est mélangé avec un polyacide minéral ou un de ses sels solubles dans l'eau, et ensuite converti en calcite ($CaCO_3$) essentiellement lamellaire, par introduction de $CO_2$.

7. Procédé selon au moins l'une des revendications 1 à 6, caractérisé en ce que l'on ajoute le carbonate de calcium basique, en tant que cristaux germes, à une suspension aqueuse d'hydroxyde de calcium, et on fait précipiter de la calcite lamellaire ($CaCO_3$), par introduction de $CO_2$, en présence de polyphosphates ou d'un organopolyphosphonate.

8. Procédé selon au moins l'une des revendications 1 à 7, caractérisé en ce que, pour l'obtention de carbonate de calcium basique en bâtonnets ou fibreux, on règle la température initiale de la suspension à 15-20°C, de préférence à 16-18°C.

9. Procédé selon au moins l'une des revendications 1 à 7, caractérisé en ce que, pour l'obtention de carbonate de calcium basique de forme cristalline somatoïde, on règle la température initiale de la suspension à 20-25°C.

10. Procédé selon au moins l'une des revendications 1 à 7, caractérisé en ce que, pour l'obtention de carbonate de calcium basique en rhomboèdres de relativement grande taille, on règle la température initiale de la suspension à 2-5°C.

11. Carbonate de calcium basique, préparé selon au moins l'une des revendications 1 à 10.

12. Utilisation du carbonate de calcium basique selon la revendication 11, dans la fabrication du papier, de peintures en dispersion, de charges pour matières plastiques, caoutchouc, résine synthétique.

**Revendications pour l'Etat contractant suivant : ES**

1. Procédé de préparation d'un carbonate de calcium basique stable au stockage, sous forme de suspension, de pâte ou de poudre, de composition $Ca_3(OH)_2(CO_3)_2$ ou $Ca_6(OH)_2(CO_3)_5$ et de structure cristalline déterminée, par carbonatation d'une suspension aqueuse d'hydroxyde de calcium par addition de $CO_2$, à des températures initiales définies de la suspension, dans la plage allant de 2 à 50°C, la carbonatation étant interrompue à un rapport molaire calcium/carbonate de 3:2 ou 6:5 et à une teneur en hydroxyde de calcium libre allant de 5 à 25 % en poids, de préférence de 5 à 10 % en poids, et soit - d'une part - à la suspension aqueuse des carbonates de calcium basiques formés étant ajoutés un polyacide minéral, un de ses sels solubles dans l'eau et/ou des substances tampon, et, après mélange, le carbonate basique étant séparé par filtration, soit - d'autre part - le carbonate de calcium basique étant obtenu sous forme d'une substance pulvérulente tendre, par séchage par atomisation, congélation ou à l'alcool (éthanol, méthanol, alcool à brûler, érythritol, etc.).

2. Procédé selon la revendication 1, caractérisé en ce que la carbonatation est effectuée en présence d'un acide phosphorique et/ou de ses sels solubles dans l'eau ou d'un polyélectrolyte de type organopolyphosphonate anionique.

3. Procédé selon la revendication 1, caractérisé en ce que la carbonatation est effectuée en présence d'acides hydroxypolycarboxyliques.

4. Procédé selon les revendications 1 à 3, caractérisé en ce que l'on ajoute aux carbonates de calcium basiques un acide gras à longue chaîne ou un de ses sels.

5. Procédé selon au moins l'une des revendications 1 à 4, caractérisé en ce que, par addition de sulfate d'aluminium à la suspension, on prépare un mélange de carbonate de calcium basique et de blanc satiné.

6. Procédé selon au moins l'une des revendications 1 à 5, caractérisé en ce que le carbonate de calcium basique est mélangé avec un polyacide minéral ou un de ses sels solubles dans l'eau, et ensuite converti en calcite ($CaCO_3$) essentiellement lamellaire, par introduction de $CO_2$.

7. Procédé selon au moins l'une des revendications 1 à 6, caractérisé en ce que l'on ajoute le carbonate de calcium basique, en tant que cristaux germes, à une suspension aqueuse d'hydroxyde de calcium, et on fait précipiter de la calcite lamellaire ($CaCO_3$), par introduction de $CO_2$, en présence de polyphosphates ou d'un organopolyphosphonate.

8. Procédé selon au moins l'une des revendications 1 à 7, caractérisé en ce que, pour l'obtention de carbonate de calcium basique en bâtonnets ou fibreux, on règle la température initiale de la suspension à 15-20°C, de préférence à 16-18°C.

9. Procédé selon au moins l'une des revendications 1 à 7, caractérisé en ce que, pour l'obtention de carbonate de calcium basique de forme cristalline somatoïde, on règle la température initiale de la suspension à 20-25°C.

10. Procédé selon au moins l'une des revendications 1 à 7, caractérisé en ce que, pour l'obtention de carbonate de calcium basique en rhomboèdres de relativement grande taille, on règle la température initiale de la suspension à 2-5°C.

11. Utilisation du carbonate de calcium basique préparé selon les revendications 1 à 10, dans la fabrication du papier, de peintures en dispersion, de charges pour matières plastiques, caoutchouc, résine synthétique.

Fig. 1

Fig. 2

Fig. 3

Fig. 4

Fig. 5

Fig. 6

Fig. 7

∡ Mikron

Fig. 8

1μm

Fig. 9

10μm

Fig. 10

Fig. 11

Fig. 12